# EUROPEAN PATENT APPLICATION

(11) **EP 3 185 377 A1**
(43) Date of publication of application: **28.06.2017**
(21) Application number: 15201491.6
(22) Date of filing: 21.12.2015
(51) Int. Cl.: H02B 1/20

(54) **BUSBAR CONNECTION DEVICE**

(71) Applicant: ABB Schweiz AG, 5400 Baden (CH)
(72) Inventor: Kraft, Klaus, 69123 Heidelberg (DE); Mruczek, Maciej, 32-800 Brzsko (PL)

(57) **Abstract**

The invention relates to a switchgear-connection-device (1 a-1 d) for electrically connecting a bus bar (2a, 2b) to at least one tubular conductor (4a-4c), comprising:
▪ a bus bar-connection-means (6a-6c) for connecting the bus bar (2a, 2b);
▪ at least one conductor-connection-means (8a-8c) which is connected to the bus bar-connection-means (6a-6c),

characterized in that
▪ the conductor-connection-means (8a-8c) comprises a ring-shaped opening (10a, 10b) for inserting the tubular conductor (4a-4c), wherein
▪ a clamping-means (12a-12c) is turn able connected to the conductor-connection-means (8a-8c), wherein
o the clamping-means (12a-12c) is foreseen for clamping the inserted conductor (4a-4c) in the ring-shaped opening (10a, 10b) by turning it in a clamp-position.

## Description

The invention relates to a switchgear-connection-device for electrically connecting a bus bar to at least one tubular conductor, comprising bus bar-connection-means for electrically and mechanically connecting the switchgear-connection-device to the respective bus bar; and conductor-connection-means for electrically and mechanically connecting the switchgear-connection-device to the tubular conductor.

A switchgear comprises a switching cabinet and electrical switches, fuses or circuit breakers, wherein a switchgear requires at least one incoming feeder and outgoing feeders to distribute electrical energy to other parts of the installation. Switchgears are required to distribute, control, protect and isolate electrical equipment.

Within switchgears, the current is conducted by bus bars and conductors, which are connected by switchgear-connection-devices. The maximum amount of current that can be safely carried thereby is determined by the cross-sectional size of the bus bars, of the conductors and of the switchgear-connection-devices. In the state of the art, bus bars and conductors are typically designed as flat strips or bars.

Common conductors are connected to feeders and/or bus bars by flat copper connection sets which are individually bended and bolted together. Similar connections are used to connect cables or bus ducts.

Disadvantageously, the connection of the flat conductor bars with the bus bar and/or the feeder is very burdensome as the conductor is typically fixed by screw connections which have to be tightened manually. Therefore, an engineer has to turn the respective screws several times in very limited space to fix the flat conductor bar.

Thus it is the object of this invention to provide a connection-device which simplifies the connection between tubular bus bars and conductors of electrical switchgears.

This objective is accomplished according to the present invention by an abovementioned switchgear-connection-device characterized in that the conductor-connection-means comprises a ring-shaped opening for inserting the tubular conductor, wherein
▪ a clamping-means is turn able connected to the conductor-connection-means, wherein
   o the clamping-means is foreseen for clamping the inserted conductor in the ring-shaped opening by turning it in a clamp-position.

The term clamping-means comprises all kind of means, which are able to fix the conductor in the ring-shaped opening by a clamping-mechanism. The clamping force is exemplary provided by turning the clamping-means and therefore pressing the tubular conductor in the ring-shaped opening. Hence, the clamping-means ensures the optimal electrical contact of the tubular conductor with the switchgear-connection-device and therefore with the bus bar.

As the conductor is connected by a clamping-means a simpler and safer connection of the bus bar to the conductor is provided. Hence, the assembly time is significantly decreased.

The goal of the clamp-connection is, to ensure a tight and simple clamping-mechanism, which provides a secure and reliable electrical connection of the tubular conductor. Further advantageously, the clamp-connection provides preferably a large electrical connection surface for the conductor, so that the electrical resistance between the tubular conductor and the switchgear-connection-device is advantageously decreased. The tubular conductor is furthermore fixed mechanical, so it is prevented from slipping away.

The invented switchgear-connection-device provides a mechanical attachment, which ensures a safe mechanical and electrical connection of the respective conductor to the bus bar. Advantageously, the switchgear-connection-device can be used for connection with a bus bar and/or with a feeder.

The advantages of this device and their embodiments are discussed in the preceding claims.

According to a preferred embodiment, the clamping-means comprises a turning axis, which extends approximately parallel to the tubular conductor. Therefore, the turning axis of the clamping-means and the clamping-means itself is approximately parallel to the extension direction of the tubular conductor. Hence, advantageously a large contact surface between the tubular conductor and the clamping-means is provided, so that the tubular conductor is fixed securely in the clamp-position. Advantageously, a space-saving connection-device is provided for connecting the tubular conductor.

In one further advantageous embodiment of the invention, the clamping-means is eccentrically connected to the conductor-connection-means, wherein the clamping-means comprises a concave arched section which is in contact with the inserted conductor when the clamping-means is turned in the clamp-position.

The clamping-means is advantageously suitable for clamping the respective conductor by a friction-connection. The eccentric shape with the concave arched section provides a durable and safe connection for the life time of the switchgear-connection-device and of the switchgear itself. Due to the concave arched section, the contact surface with the tubular conductor is advantageously increased, wherein the radius of the concave arched section is fitted to the radius of the tubular conductor.

In a further preferred embodiment, at least one contact-means is inserted between the ring-shaped-opening and the inserted conductor. Advantageously, the contact-means comprises a lower material strength than the material of the conductor-connection-means and the material of the conductor, so that it deforms elastically when the clamping-means is turned in the clamp-position. Therefore, the contact-means provide the electrical connection between the respective conductor and the ring-shaped-opening. By inserting the contact-mean in between, advantageously the transitional cross-section is enlarged, so that the transition resistance is reduced. The contact-means might be exemplary a multidisc contact-area, which is deformable due to its material properties and/or due to its geometric shape. Advantageously, the respective counter bodies, in this case the ring-shaped opening of the conductor-connection-means and the conductor itself, are stiff compared to the contact-means. Without inserting the contact-means, the transitional cross-section is significantly smaller, as only one line of contact between the ring-shaped opening and the tubular conductor is provided.

Further advantageously, by inserting contact-means with different sizes, the switchgear-connection-device is adaptable to different diameters of conductors without varying the diameter of the ring-shaped opening. The size of the ring-shaped opening is not varied, as the size of the contact-means, which his placed between the conductor and the ring-shaped opening, is adapted according to the respective application.

In a preferred embodiment the contact-means has a hose-clamp-shape, preferably with an outer diameter that exceeds the inner diameter of the ring-shaped-opening, so that the contact-means is self-retaining in the ring-shaped-opening when being placed coaxial therein.

By compressing the hose-clamp-shaped connection-means and inserting it in the ring-shaped-opening, the connection-means is self-retaining therein. Therefore, the assembly of the connection is advantageously simplified.

In an advantageous embodiment, the clamping-means is connected to a screw head, so that the clamping-means is turn able by an operating-device. Advantageously standardized tools can be used to turn the clamping-means, so that the conductor is clamped.

In a further embodiment, the clamping-means is turned by an angle between 45 and 180 degree, especially 90 degree, in the clamp-position. Advantageously, the operator only has to execute very limited movements in the restricted place.

Further advantageously, a switchgear, particularly a low voltage switchgear, comprises at least one switchgear-connection-device according to one of the proceeding claims, for electrically connecting the bus bar to at least one tubular conductor. The switchgear-connection-device can advantageously be used in switchgear assemblies for energy distribution, for power distribution or AC or DC distribution. The advantages of this switchgear-connection-device are described in the claims and the preceding description. In the low voltage range, switchgears are used for voltages up to 1kV and for currents up to several thousand amperes, in particular up to 6300A.

In a further embodiment inside the clamping means of the switchgear-connection-device a multidisc contact area is inserted to reduce the resistance of the contact area, wherein an eccentric insert is used to fix a tubular conductor and grant electrical contact as soon as the eccentric insert is turned by 90° and wherein the shape of the eccentric insert makes sure that the connection will not open during the life time of the switchgear.

These features and further advantageous embodiments are contained in the claims and shall be illustrated by means of exemplary in the figures contained in the drawing attached to this specification.

The attached drawing show in
- Fig. 1:: a cross-sectional view of a first exemplary switchgear-connection-device with an inserted tubular conductor,
- Fig. 2:: a cross-sectional view of a second exemplary switchgear-connection-device with an inserted contact-means and a tubular conductor,
- Fig. 3:: an exemplary third switchgear-connection-device with inserted hose-clamp shaped contact-means, and
- Fig. 4:: an exemplary fourth switchgear-connection-device with an inserted tubular conductor.

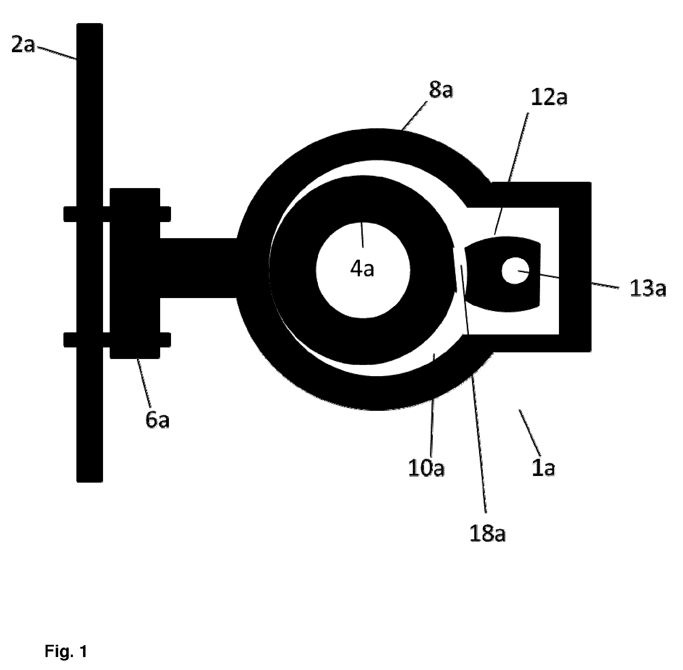

Fig. 1 shows a cross-sectional view of a first exemplary switchgear-connection-device 1 a with an inserted tubular conductor 4a. The tubular-conductor 4a is clamped in a ring-shaped-opening 10a of a conductor-connection-means 8a by a clamping-means 12a, which comprises a turning axis 13a that extends parallel to the middle axis of the tubular-conductor 4a. The clamping means 12a comprises a concave arched section 18a at its front, which presses the tubular-conductor 4a towards the inner diameter of the ring-shaped opening 10a. Hence, the tubular conductor 4a is fixed in the clamp-position so that a large contact area between the ring-shaped-opening 10a and the tubular conductor 4a is provided, so that a low transition resistance in between is ensured. As the tubular conductor 4a is pressed against the ring-shaped-opening 10a, it is accommodated slightly eccentrically in the ring-shaped opening of the conductor-connection-means 8a. In this figure, the clamping-means 12a clamps the conductor 4a by turning it in the clamp-position. In the clamp-position the concave arched section point towards a bus bar 2a, wherein the concave arched section 18a clamps the conductor 4a in a stable position. The concave arched section 18a is formed, so that it fits to the outer diameter of the tubular conductor 4a, wherein the radius of the concave arched section 18a is at least marginally greater compared to the radius of the tubular conductor 4a.

The switchgear-connection-device 1a comprises a bus bar-connection-means 6a, which is exemplary attached to the bus bar 2a by a screw connection. The bus bar-connection-means 6a is exemplary connected via a crosspiece to the conductor-connection-means 8a.

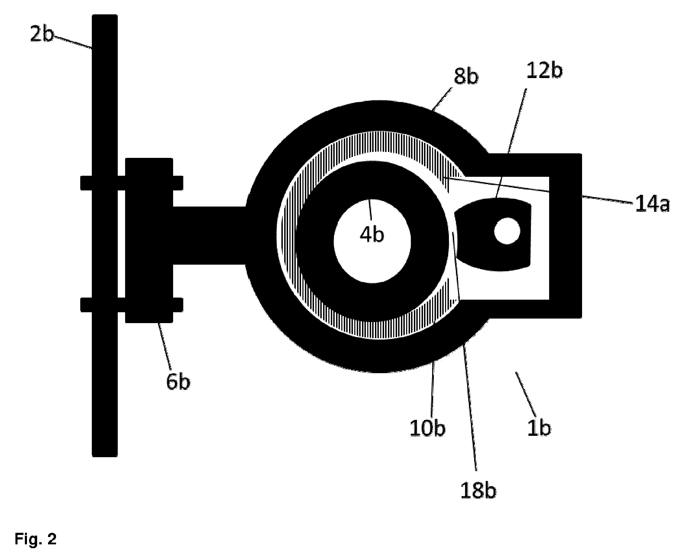

Fig. 2 shows a cross-sectional view of a second exemplary switchgear-connection-device 1 b with an inserted contact-means 14a and a tubular conductor 4b. The tubular conductor 4b is pressed by a clamping-means 12b against the contact-means 14a, which is placed concentrically between the conductor 4b and the conductor-connection-means 8b. By inserting the connection-means 8b in between the tubular conductor 4b and the ring-shaped-opening 10b the contact area in between is further increased, so that the contact resistance in between is further decreased.

The contact-means 14a is deformed elastically, when it is clamped together. The contact-means 14a comprises a hose-clamp-shape, wherein the outer diameter exceeds the inner diameter of the ring-shaped-opening 10b. Advantageously, the contact-means 14a is self-retaining in the conductor-connection-means 8b when the conductor 4b is not inserted. When the conductor 4b is inserted and clamped by turning the eccentrically shaped clamping-means 12b in the clamp-position, the contact-means 14a is clamped between the ring-shaped-opening 10b and the tubular conductor 4b.

Exemplary, the clamping-means 12b is turned counterclockwise by an angle of approximately 45 degree, so that the conductor 4b is clamped. The conductor 4b can be untightened, by turning the clamping-means 12b in clockwise direction.

By varying the contact-means 14a according to its thickness and inserting it in the ring-shaped-opening 10b, the switchgear-connection-device 1 b is adaptable to different diameters of conductors 4b without varying the inner diameter of the ring-shaped opening 10b. The outer diameter, the inner diameter and/ or the wall thickness of the conductor 4b might vary, as the conductor is adjusted to the required rated current. As contact-means 14a with different diameters and thicknesses are insert able, the combination of conductors 4b with the switchgear-connection-device 1 b is advantageously more flexible.

The thickness of the contact-means 14a is advantageously chosen, so that the tubular conductor 4b can be inserted by tension-free fit. Not depicted in the figure is, that the tubular-conductor 4b and/or the ring-shaped-opening 10b of the conductor-connection-means 8b can also comprise an oval form, or even a rectangular cross-section, wherein the shape of the contact-means 14a is adapted thereto.

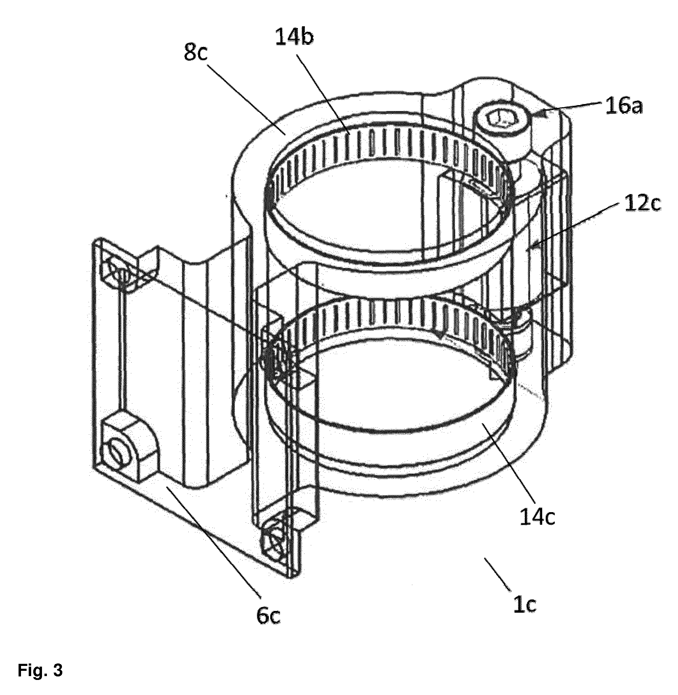

Fig. 3 shows an exemplary third switchgear-connection-device 1 c with inserted hose-clamp shaped contact-means 14b and 14c. In this figure, the two contact-means 14b and 14c are inserted in the ring-shaped opening of the conductor-connection-means 8c. Therefore, the contact-means 14b and 14c are arranged concentrically in the ring-shaped opening of the conductor-connection-means 8b.

A bus bar-connection-means 6c is depicted, which is connected by a T-connection with the conductor-connection-means 8c. By connecting the bus bar-connection-means 6c by a T-connection to the conductor-connection-means 8c, sufficient space between the two connections means is gained, which is advantageously required for connecting the bus bar with the bus bar-connection-means 6c.

The bus bar-connection-means 6c comprises a flat mounting surface which is foreseen to connect the switchgear-connection-device 1c to a - not depicted - bus bar and/or to a feeder, wherein the flat mounting surface exceeds approximately parallel to the middle axis of the tubular conductor. The flat mounting surface comprises holes, so that the bus bar-connection-means 6c is connectable by respective screw connections to a bus bar and/or a feeder.

The eccentrically shaped clamping-means 12c is connected with a screw head 16a, so that the clamping-means 12c can be turned by use of a standardized tool, exemplary a socket screw key, or any other kind of screw-driver. The bus bar-connection-means 6c can be exemplary attached to a bus bar and/or a feeder by a bolted connection, by a clamping connection or even by a welded connection.

Furthermore, a conductor can be fastened in the ring-shaped-opening of the conductor-connection-means 8c by a click connection. Hence, the clamping-means 12c is clamped by a click connection, which snaps in the clamp-position, so that an inserted conductor is fixed.

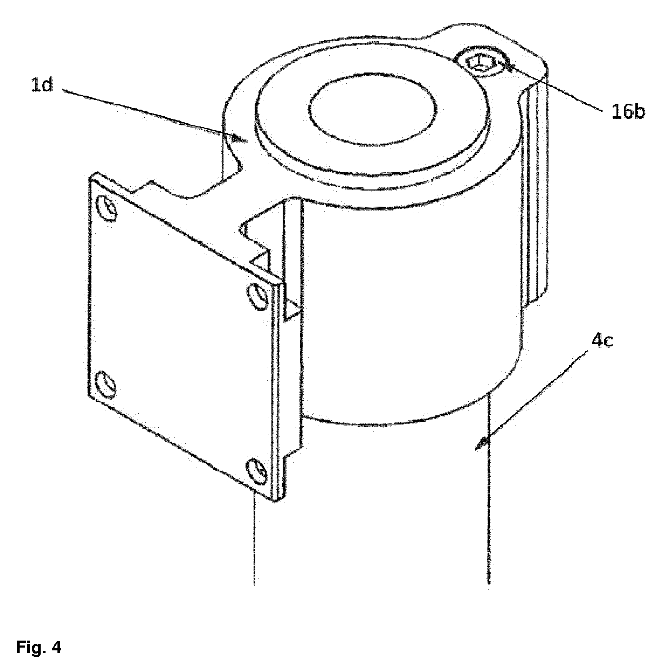

Fig. 4 depicts an exemplary fourth switchgear-connection-device 1d with an inserted tubular conductor 4c. The conductor 4c is inserted in the switchgear-connection-device 1 d and it is fixed by turning the screw-head 16b, which is connected with a not depicted clamping-means, in the clamp-position. Hence, the assembly of the switchgear-connection-device 1d with the conductor 4c is significantly simplified by turning the clamping-means in a clamp-position. Advantageously, the conductor 4c has to be inserted and clamped by turning the screw head 16b by half a turn or less.

The tubular conductor is advantageously made of copper or aluminum tubes, to provide the required electrical conductivity. The surface of the switchgear-connection-device 1d can be isolated by applying an insulation coating. The insulation coating can be made exemplary from glass, porcelain or composite polymer materials. Porcelain insulation coatings have a dielectric strength of about 4-10 kV/mm. Further advantageously, the switchgear-connection-device 1d might be coated with polymer composite coatings. Further silicone rubber or ethylene propylene diene monomer rubber (EPDM) might be used as isolating material. These isolating materials are advantageously lighter in weight and have good hydrophobic capabilities; hence these materials are very suitable for service in switchgear devices.

The invention describes ring clamp connectors to connect a feeder to the main bus bar of a low voltage switchgear and to transformers or other consumers by the use of cable or bus duct connections. The ring clamp connector is used as connection block from a conductor tube to the main bus bar system. The same connection block will be connected to the fixed part of a withdrawable feeder. Finally also the cable connection angles will be connected to the same ring clamp.

The ring clamp is a closed extruded ring shape. Inside the ring a multidisc contact area is inserted to reduce the resistance of the contact area. Additionally an eccentric insert is used to fix the tubular conductor and grant electrical contact as soon as the eccentric insert is turned by 90. The shape of the eccentric insert ensures that the connection will not open during the life time of the switchgear. In conclusion, a ring clamp with eccentric insert for conductor tubes in low voltage feeder sections is provided.

### List of reference signs

- 1a: First switchgear-connection-device
- 1b: Second switchgear-connection-device
- 1c: Third switchgear-connection-device
- 1d: Fourth switchgear-connection-device

- 2a: First bus bar
- 2b: Second bus bar

- 4a: First tubular conductor
- 4b: Second tubular conductor
- 4c: Third tubular conductor

- 6a: First bus bar-connection-means
- 6b: Second bus bar-connection-means
- 6c: Third bus bar-connection-means

- 8a: First conductor-connection-means
- 8b: Second conductor-connection-means
- 8c: Third conductor-connection-means

- 10a: First ring-shaped-opening
- 10b: Second ring-shaped-opening

- 12a: First clamping-means
- 12b: Second clamping-means

- 13a: Turning axis

- 14a: First contact-means
- 14b: Second contact-means
- 14c: Third contact-means
- 16a: First screw-head
- 16b: Second screw-head
- 16c: Third screw-head

- 18a: First concave arched section
- 18b: Second concave arched section

## Claims

1. Switchgear-connection-device (1 a-1 d) for electrically connecting a bus bar (2a, 2b) and at least one tubular conductor (4a-4c), comprising:
▪ a bus bar-connection-means (6a-6c) for connecting the bus bar (2a, 2b);
▪ at least one conductor-connection-means (8a-8c) which is connected to the bus bar-connection-means (6a-6c),
**characterized in that**
▪ the conductor-connection-means (8a-8c) comprises a ring-shaped opening (10a, 10b) for inserting the tubular conductor (4a-4c), wherein
▪ a clamping-means (12a-12c) is turn able connected to the conductor-connection-means (8a-8c), wherein
o the clamping-means (12a-12c) is foreseen for clamping the inserted conductor (4a-4c) in the ring-shaped opening (10a, 10b) by turning it in a clamp-position.
2. Switchgear-connection-device (1a-1d) according to claim 1, **characterized in that**, the clamping-means (12a-12c) comprises a turning-axis (13a), which extends approximately parallel to the tubular conductor (4a-4c).
3. Switchgear-connection-device (1a-1d) according to claim 1 or 2, **characterized in that**, the clamping-means (10a, 10b) is eccentrically connected to the conductor-connection-means (8a-8c), wherein the clamping-means (10a, 10b) comprises a concave arched section (18a, 18b) which is in contact with the inserted conductor (4a-4c) when the clamping-means (10a, 10b) is turned in the clamp-position.
4. Switchgear-connection-device (1a-1d) according to one of the proceeding claims, **characterized in that** at least one contact-means (14a-14d) is inserted between the ring-shaped-opening (10a, 10b) and the inserted conductor (4a-4c).
5. Switchgear-connection-device (1a-1d) according to claim 4, **characterized in that** the contact-means (14a-14d) has a hose-clamp-shape, preferably with an outer diameter that exceeds the inner diameter of the ring-shaped-opening (10a, 10b), so that the contact-means (14a-14d) is self-retaining in the ring-shaped-opening (10a, 10b) when being placed coaxial therein.
6. Switchgear-connection-device (1a-1d) according to one of the proceeding claims, **characterized in that**, the clamping-means (12a-12c) is connected to a screw head (16a-16c), so that the clamping-means (10a, 10b) is turn able by an operating-device.
7. Switchgear-connection-device (1a-1d) according to one of the proceeding claims, **characterized in that** the clamping-means (10a, 10b) is turned by an angle between 45 and 180 degree, especially 90 degree, in the clamp-position.
8. A switchgear, particularly a low voltage switchgear, comprising at least one switchgear-connection-device (1a-1d) according to one of the proceeding claims, for electrically connecting the bus bar (2a, 2b) to at least one tubular conductor (4a-4c).
